# EUROPEAN PATENT APPLICATION

(11) **EP 3 185 184 A1**
(43) Date of publication of application: **28.06.2017**
(21) Application number: 15460128.0
(22) Date of filing: 21.12.2015
(51) Int. Cl.: G06N 3/02, G06Q 20/14

(54) **THE METHOD FOR ANALYZING A SET OF BILLING DATA IN NEURAL NETWORKS**

(71) Applicant: Aiton Caldwell SA, 80-172 Gdansk (PL)
(72) Inventor: Zaprzalski, Sebastian, 61-858 Poznan (PL)

(57) **Abstract**

The heuristic analysis method of the data set in the neural network lies in the fact that in the input layer of the neural network is used the number of neurons corresponding to the number of features in the data vector, where the applied activation function is linear.

In the hidden layer is determined the initial number as a value between the number of neurons in the output layer, and the total number of neurons in the input layer and the hidden layer.

The non-linear activation function of neurons in the hidden layer is applied. In the configuration of the output layer is used the number of neurons corresponding to the number of classes and as the activation function is applied the SoftMax function.

In the neural network is built a classifier model, and next the self-learning function is activated in a way that builds a self-learning set and a training set by processing all events for the given client. Each event is attributed to a category, and such constructed set is divided in a ratio of 9: 1 on a self-learning and a training set.

## Description

The subject of invention relates to heuristic analysis of billing data set in neural networks in order to support decision-making process. The method is based on a neural network and work in real time in Cloud Computing technology. The neural networks technology according to the present invention employs heuristic analysis of billing data set in decision-making process, based on statistical methods supported by neural networks. The method works not only ex post but also in predictive mode.

A variety of heuristic analysis solutions of the data set in neural networks is known. Neural networks are mathematical structures which allow the calculation by performing input data processing by neurons equipped with weights, which values are determined in the self-learning process. There are many types of neural networks: one-way, recursive, SOM, SVM etc. They vary in topology, purpose and in the training network method. The most popular are unidirectional multilayer networks (MLP). Depending on the applied configuration, they work well in the classification and regression issues. The described solution is based on the classifier constructed on the basis of such a network. The implementation uses the Encog library. It contains tools for the neural networks design and is optimized for performance and evaluation of developed self-learning models.

The heuristic analysis is based on defragmenting and combining packets into data streams, analyzing packet headers and application protocols. In most IDS systems (Intrusion Prevention System) heuristic analysis is carried out simultaneously with the data normalization before being subjected to the signature analysis.

The signature analysis is based on searching in data strings, packets characteristic for known network attacks. A key element is the signature database, built with the appearance of new attacks and appropriately frequently updated.

The well-known method of using heuristic analysis in the neural network to detect violations of the system is presented in the patent description of international application no WO 2015/158198. The method of detecting violation according to this known solution employs a neural network in a self-learning options. The method is based on monitoring and collecting information regarding the quantity, flow and converting data in monitoring of the sample data applied to self-learning of neural networks. Next, the sample data are classified according to the types of errors and a sample data set corresponding to each type of error is obtained. Later, a neural network for each type of error is designed and then by using a sample data set of failure, the network is trained and the as result a model of this type of failure is obtained. The recognition models of all types of errors in a single mechanism are combined and the diagnosis of the error based on monitoring data collected in real time is performed.

In another solution known from the International Application no. WO 2015/178977 are illustrated another solutions for simultaneous processing and analysis of data in neural network comprising the technology converting function of the part of neural network to the first node for the processing other information streams for a limited period. The method according to this known solution also includes a solution of the neural network in the mentioned first processing node. Additionally, the method involves the return of part of the neural network to the second processing node after the mentioned period of time. Furthermore, the solution includes the organization of a part of the neural network with a second processing node.

Another solution of the neural network is described in International Patent Application no. WO 2015/134900. According to this known solution, the neural network contains a lot of gates for receiving input signals, and many synaptic connections with inputs with the repair_functions. The network comprises additionally distribution modules. Each distribution splitter is connected to one of the inputs for receiving dedicated input signal and selects one or more repair counterbalances being in correlation with the values of the input signal. The network also includes a set of free neurons. Each neuron has an output connected to at least one of the inputs through one of synapses and generates a sum of the neuron by summing the repair signals selected from each synapse connected to respective neuron inputs. Moreover, the network according to this known solution has correction calculator, where_is received a corresponding output signal, the deviation of the neuron sum from the desired output signal is determined, and the corresponding repair masses are modified by using established error margin. Nest, the modified repair modules are summed up in order to determine the sum and the error range is minimized for the purpose of training the neural network.

According to another solution of heuristics method analysis in neural network, known from the international patent application no. WO 2015/118686, based on a odd-even check matrix of error correction code, in the input layer containing neurons nodes, inside this layer are produced loose synapses providing a connection between the nodes in the hierarchical neural network with the intermediate layer and the output node connected with the upper hierarchy node constituting the self-learning node module. The hierarchical neural networks layers in this known solution include weights between the size of nodes and the size of the unit processing discriminatory data to solve the data classification problem. The solution provides a regression signal by using a hierarchical neural network, which is updated with the weighs values, self-learned by the procedure of self-learning system. In this known solution, the error correction code is modulated by pseudo-random codes, the cyclic or pseudo-cyclic codes. The hierarchical neural network system according to this known solution is characterized by the fact that one of the codes is the LDPC code (Low Density Parity Check Code). According to this known solution the arrangement of a odd-even check matrix of error correction code comprises an input layer of neurons having synaptic nodes in order to form a loose coupling parts for performing coupling with a hidden neurons layer consisting of a multi-layered intermediate layer and multi-layer output layer in the form of a hierarchy network for self learning of the network left without supervision. In this known solution, the device in the form of neural network solves the problem of classification or regression problem by deep neural networks, which are updated with corrected weighted value using the weight regulator.

Further known solution was described in International Patent Application no. WO 2015/073162. A system for self-learning of neural network according to this known solution comprises a source for producing a number of digital input signals, the processor connected to the source receiving multiple digital input signals, and a display connected to the processor in order to display output information.
The processor in this known solution is configured for self learning of the neural network in order to obtain information to generate a number of outputs from multiple first input set of digital input signals. In this known solution is a multiple-output limiting the number of possible patterns, to which are suitable both input and output data for a neural network. In this known solution, the accuracy of the neural network is greater than 90%. The maximum number of data from multiple hidden nodes is determined by finding the point at which the accuracy of the top-level concept retains improvement of estimation for accuracy improvement of the lower level.

In a further solution known from the international patent application no. WO 2015/134244 was shown another method for processing data in the artificial neural network. The method is based on the fact that it reduces the accuracy of one or more of the functions performed by the processing of the neuron model unit, based at least in part on the availability of computing resources. Furthermore, the reduction in resolution is compensated by adjusting one or more network counterweights. Decreasing the resolution comprises the sub-sampling, while compensation consists of increasing the mass of data proportionally to the reduction of resolution. According to this known solution a further reduction in resolution comprises the reduction of the number of processed neuron model units. In a further solution known from the international patent application no. WO 2015/016640, the presented method relates to the computational neural network, an apparatus and a system. The solution describes a computing device in the form of a network, a system and a method which operates with a synchronization system. In the synchronization system all parts are synchronized by the system clock and include a distributed memory structure for storing data in the artificial neural networks and carry out calculations. The solution comprises the structure with processing time division of all neurons in a streaming system, which allows the use of different neural network models in a large scale which enables highspeed processing. The neural network computing device according to this known solution may comprise a control unit for controlling the neural network, multiple memory units for entering the output value of the neuron on the connection line front-end by a dual memory port. The system includes a subsystem for calculating the neuron output value of the extreme end of the new line connection using the output value of the front-end neuron on connection line input with each of the multiple of memory units and for bringing the output value back for each of a multiple memory units.

The purpose of the invention is to provide a solution with a significant versatility that will allow to use it regardless of the application in the telecommunications industry, including sectors such as energy, water, banking, insurance, and also in the sphere of broadly understood logistics industry.
The fraud detection understood as a monitoring and reporting process of undesirable cases of use by unauthorized for this service customers evades clear definition. Depending on the industry and the studied field of events, the definition of fraud is variable and may be incidental upon the occurrence of the event qualified as unusual, or may be extended in time where the observed trend bears the marks of fraud. The fraud monitoring process may focus on different aspects of the fraud event, ranging from prevention, such as a monitoring and further for diagnosis of occurring cases. In addition, the criteria for considering the case as fraud changes over time. This is inseparably linked to the dynamics of changes and development of the areas, in which frauds are detected.
Therefore, the studies about the fraud phenomenon should be seen as a process by which new models are developed to ensure satisfactory results.

The shown solution according to the invention is based on dynamic model. Depending on the specifics of studied phenomenon and particular purpose, it is possible to define the desired allocation of customers into segments and the introduction of a number of different cases categories, along with the criteria of belonging to these categories..

In solution according to the invention, the data about customers and events concerning them are processed. There are no requirements regarding the form and format of the data, however, the responsibility for interpreting input data rests on the neural network project. It is possible to adapt the described solution to the required set of data.

Below, are defined specific terms used in the present invention.
The segment means the study regarding fraud in a given group of customers. The study is done within the defined customer segments. The belonging the customer to the segment allows to identify groups characterized by similar features.
This increases the chances for correct classification of events within the group.

Category represents events associated with the selected client and assigning to a category. Categories are defined within the configuration as part of the domain model. The available categories are defined by customer segment, to which events relate. Defined categories should be separate, otherwise the results will not be satisfactory.

The interval means that at the segment level it is possible to determine how often an attempt to upgrade the classifier model is made.

The age means that at the segment level it is possible to determine the maximum age for the events taken into account in the self-learning process.

The subject of invention is shown in claim 1 and in the following patent claims.

According to the invention, a method of heuristic analysis of the data set in the neural network is based on the designing neural network comprising the input layer, where the number of neurons in this layer corresponds to the number of elements in data vector, wherein as a function of the activation of the network is applied the linear function. In the hidden layer is determined an initial number of neurons as a value between the number of neurons in the output layer, and the total number of neurons in the input layer and the hidden layer.
The non-linear neural activation function is applied, where in the output layer configuration is used the number of neurons corresponding to the number of classes. As the activation function is applied the SoftMax function.
According to the invention, a method of heuristic analysis is characterized by building in the neural network the classifier model, and then activating the self-learning function in such a way that the self-learning set and training set are constructed by processing all events of the given client, wherein each event is assigned to category, then such constructed collection is divided in the proportions of 9: 1 on a self-learning and a set training set.

According to the invention, the neural network preferably is constructed automatically, and next is subjected to training, and after completion the self-learning step, the network model is evaluated.

In a preferred solution version according to the invention, the evaluation result is compared with the previous evaluation of the network assigned to this segment and when the assessment of the network is better than the previous assessment of the network, the previous network is replaced by evaluated network. In the solution according to the invention, the application works in two modes: self-learning and training. In the self-learning mode classifier model is constructed for the selected segment. The learning process can be activated automatically using a parameter interval at the segment level or may be forced by the user. The first step in the self-learning process is to construct a training and self-learning set. For this purpose, the application is processing all events of a given client not older than the maximum age specified for the segment.
To each event at this stage is assigned a category. Such constructed collection is divided into a ratio of 9: 1 on the self-learning and the training set. The neural network Is constructed and is subjected to training. Topology and network parameters can be specified as a segment configuration element, otherwise the application will construct the network automatically. Upon completion the self-learning, the network model is evaluated. The obtained evaluation is compared with the previous evaluation of the assigned network for the specific segment. If the obtained assessment is better, the previous network is replaced by a new network.

The fraud detection understood as a monitoring and reporting process of undesirable cases of use by unauthorized for this service customers evades clear definition. Depending on the industry and the studied field of events, the definition of fraud is variable and may be incidental upon the occurrence of the event qualified as unusual, or may be extended in time where the observed trend bears the marks of fraud. The fraud monitoring process may focus on different aspects, ranging from prevention, such as a monitoring and further the diagnosis of occurring cases. In addition, the criteria for considering the case as fraud changes over time. This is inseparably linked to the dynamics of changes and development of the areas, in which frauds are detected. Therefore, the studies about the fraud phenomenon should be seen as a process by which new models are developed to ensure satisfactory results.

The shown solution according to the invention is based on dynamic model. Depending on the specifics of studied phenomenon and particular purpose, it is possible to define the desired allocation of customers into segments and the introduction of a number of different cases categories, along with the criteria of belonging to these categories..

In solution according to the invention, the data about customers and events concerning them are processed. There are no requirements regarding the form and format of the data, however, the responsibility for interpreting input data rests on the neural network project. It is possible to adapt the described solution to the required set of data.

In the evaluation mode the classification of events presented within a given segment is curried out. The network model developed at the stage of self-learning is applied. Only events arising from the classifier self-learning process for the segment are examined. A report with a category forecast is presented to the user for events processed in the client context. The configuration of applied neural network is possible for each segment. This allows to create a network fitted optimally as possible to the considered problem. Due to the use of the network for the classification problem, each network has common features, such as:
- the input layer, where the number of neurons in this layer corresponds to the number of elements in the data vector, and the applied activation function is linear
- the hidden layer, which determines an initial number of neurons to a value between the number of neurons in the output layer, and the total number of neurons in the input layer and in the hidden layer, and the final number of neurons in the hidden layer is determined experimentally; activation function of neurons in this layer is usually a non-linear function
- the output layer, where in the case of using the network for the task of configuration data classification of the output layer, it is assumed that the number of neurons corresponding to the number of classes or the use of SoftMax as the activation function.

Within the network configuration it is possible also to specify: the number of hidden layers, the number of neurons in each hidden layers, the application of a constant load for each of the layers and to define transfer function of a neuron for each of the layers, for example the sigmoid, sinusoidal, linear, logarithmic activation, or hyperbolic tangens.

An important element of the network configuration according to the invention is the use of a dedicated algorithm to train the network. The application allows to select one of the following algorithms presented in Table 1:

**Table 1.**

| Algorithm | Description |
|---|---|
| BackTrainer | The classic back-propagation algorithm with applied strategy for dynamic adjustment of the self-learning pace |
| ResilientTrainer | Rprop Algorithm |
| ManhattanTrainer | Manhattan Algorithm |
| QuickTrainer | QPROP Algorithm |
| SCGTrainer | The conjugate gradient algorithm. |

For the above algorithms, it is possible to determine the additional following parameters:
- learnRate - the rate of self-learning, a typical value is 0.1 (only BackTrainer, ManhattanTrainer, QuickTrainer)
- momentum - the learning moment, a typical value is 0.9 (only BackTrainer
- initialUpdate - initial value, the 'update-value', a specific feature for Rprop, a typical value is 0.1 (only ResilientTrainer)
- maxStep - the maximum value, the 'update-value', a feature specific for Rprop, a typical value is 50 (only ResilientTrainer)
- crossValidationFolds - the number of subsets for cross-validation, value 0 switches off cross validation
- maxlterations - a maximum number of iterations in the network training process, a value of 0 switches off the iteration limit
- toleratedCycles - the number of iterations considered for the final stop condition
- minImprovement - the training is interrupted in the case of no improvement of observed error adjustment by the value of this parameter over the number of iterations specified by 'toleratedCycles' parameter.

The configuration of applied neural network is possible for each segment. This allows to create a network fitted optimally as possible to the considered problem. Due to the use of the network for the classification problem, each network has common features, such as the input layer, where the number of neurons in this layer corresponds to the number of elements in the data vector, and the applied activation function is linear. The hidden layer, where the function of the neuron activation in this layer, usually is nonlinear and the output layer, where is proposed the configuration of this layer assuming the number of neurons corresponding to the number of classes and the use of SoftMax function as the activation function. In addition, within the proposed configuration, it is possible to determine the number of hidden layers, the number of neurons in each hidden layer, the application of a constant load (bias) for each layer and neuron activation functions for each layer.

The subject of invention is presented below in the embodiment.

The reference network configuration according to the invention is designed to detect fraud among Carrier-eX platform users, which is used to serve the Applicant customers. The seeking scheme of events assumes increased traffic for a specific account which leads to exceeding the limits and consequently block the account. The detection of such cases at an early stage is essential to reduce costs, which will not be covered in case of actual fraud.
Customers with a similar scheme of service are grouped into segments that are defined on the basis of three characteristics:
- platform in version: 3.x or 4.x
- domain: FCN or TLN
- type of payment: postpaid (subscription)
Segments are enriched with additional features where the aim is to cluster within particular segments, customers with possibly similar characteristics using service platform. The criteria for the outgoing and incoming traffic per unit of time are added to specific segments:
- the number of calls
- the total call time
- the total cost of calls
And additionally:
- credit events
- debit events
Input data is obtained based on the CDR (Call Detail Record) using made calls, financial history and information about clients.
In this embodiment, the categories are introduced in accordance with Table 2.

**Table 2**

| **Category** | **Meaning** |
|---|---|
| NEUTRAL | The event not arousing suspicion, fitting within the standard use of the service. |
| SUSPECT | The case arousing suspicion, potentially fraud. |
| FRAUD | The case of exhaustive abusive |

In this example, for training network is applied back-propagation algorithms. Different variants of the algorithm (Manhattan, Resilient) and alternatives (Quick, conjugate gradient method) were investigated. Before starting training, the neural network weights were initialized with random values. In this way were provided the beginning conditions for the algorithm's training, as well as avoiding the regular limp of algorithm for local minimum for subsequent launches. To evaluate the accuracy of fitting network, a series of experiments taken into account. The most important element in assessing the suitability of the network was an error obtained on a testing set. It was assumed that close to 100% network fitting to the self-learning set will generally be related to the event of excessive fitting and the error obtained on the testing set will be disproportionately large. In order to avoid this event, the cross-validation was applied. This extended the network training process, but obtained model is susceptible to overfitting. During the network training, the aim was to minimize the mean square error.

The obtained results were the best for those segments that have shown a high degree of similarity of the platform usage by the client. An important criterion was also the multiplicity of events in the segment, where the results for the segments of small events numbers were not satisfactory.
Table 3 shows exemplary results for one of the segments regarding the platform 3.x and FCN domain.

**Table 3.**

| The training time (ms) | Error on the training set (%) | Error on the testing set (%) |
|---|---|---|
| 11011 | 1,46 | 3,21 |
| t10893 | 1,42 | 3,24 |
| 15441 | 1,39 | 3,26 |
| | | |
| 554947 | 2,29 | 3,29 |
| 158949 | 1,30 | 3,39 |

As stated, the training time depends on the used training algorithm. The quickest and the most efficient algorithm proved to be Rprop. The classic back-propagation algorithm (Backprop) gave similar results but achieving them requires a significantly higher training time, more iterations. Similarly for the Qprop and Manhattan algorithms, the time required to achieve results similar to Rprop was an order of magnitude larger, while the achieved results were lower level than Rprop and Backprop. The worst results were achieved using a conjugate gradient algorithm, where the training process was stack in local minima, therefore reaching a satisfactory outcome was very difficult.

Tests were performed with different variants of the network topology. The study of the neural network was focused on configurations with one hidden layer, as the introduction of subsequent layers did not yield clear results, it had very negative influence on the network training time. The research was carried out with various amount of neurons in the hidden layer. As a result of the experiments, it was found that the best results are achieved for networks with a number of neurons between 10 and 30. The larger number of neurons can produce better match to the tested set, on the other hand, it resulted in obtaining poor performance on a testing set. The problem of over-fitting is possible to solve through the use of cross-validation, which significantly increases the network training time. For networks with fewer neutrons, a lower level of match for training dataset was achieved, but the results on the testing dataset were comparable to results achieved by the network with a higher number of neurons (no need for the cross-validation). Finally, the best results were achieved using a network that includes the configuration of 10 neurons in the hidden layer.

The ability to adapt tools for any field and flexibility regarding input source let assume that the tool can be successfully implemented in other application areas, not necessarily related to telecommunications.

## Claims

1. A method of heuristic analysis of the data set in the neural network lies in the fact that it builds up an input layer of the neural network, where the number of neurons in the input layer corresponds to the number of elements in the data vector and the employed activation function is linear, and in the hidden layer is determined by an initial number of neurons as a value between the number of neurons in the output layer and the total number of neurons in the input layer and the hidden layer. At the same time, it is applied a non-linear activation function of the neurons in the hidden layer, but in the configuration of output layer is used the number of neurons corresponding to the number of classes, and as the activation function is used the function SoftMax, **characterized in** such a way that in the neural network is built a classifier model. Subsequently, the self-learning function is activated in a way that builds a self-learning set and a training set by processing all the events of the given customer, whereby each event is attributed to a category, next the constructed set is divided in a ratio of 9: 1 on a self-learning set and a training set.

2. The analysis method according to claim 1, **characterized by** the neural network being constructed automatically, undergoes training and self-learning, and after completion of the self-learning step, the network model is evaluated.

3. The analysis method according to claim 2 is **characterized by** evaluation of result that is compared with the previous evaluation of the network assigned to that segment, and if the network evaluation is better than the previous one, the previous network is replaced by the evaluated network.

4. The analysis method according to claim 1 is **characterized by** the applied number of neurons in the input layer of the neural network corresponding to the number of elements in the data vector, and by using the_linear activation function.

5. The method of analysis according to claim 1 is **characterized in** such a way that in the hidden layer of the neural network is applied the number of neurons which is between the number of neurons in the output layer and the total number of neurons in the input layer and the hidden layer, and a non-linear activation function of the neurons in the hidden layer is used.

6. The method of analysis according to claim 1 is **characterized in** such a way that in the configuration of the output layer of the neural network is applied the number of neurons corresponding to the number of classes.
